# EUROPEAN PATENT APPLICATION

(11) **EP 2 557 231 A2**
(43) Date of publication of application: **13.02.2013**
(21) Application number: 12173695.3
(22) Date of filing: 26.06.2012
(51) Int. Cl.: E02B 7/20, E02B 7/40, E02B 8/08

(54) **Flow weir**

(30) Priority: 27.06.2011 NL 2006999
(71) Applicant: Groot Wildenberg Waterbeheersing, 7431 PW Diepenveen (NL)
(72) Inventor: Te Riele, Johannus Hermanus Antonius, 7431 PW Diepenveen (NL)
(74) Representative: Plaggenborg, Menko Bernard

(57) **Abstract**

The present invention relates to a flow weir, the flow rate being determined by a floating body that is positioned in an upstream water body. The flow weir comprises cheek plates and an overflow edge both being positioned in a passage of a weir wall. The water flows from an upstream water body over a retaining edge in a downstream water body. A further embodiment comprises a weir plate guiding said water from an upstream water body towards a downstream water body.

## Description

The present invention relates to a flow weir according to the preamble of claim 1.

Such a weir is known in the art. For example, US 5139364 teaches a flow weir embodied as a fishway. Said weir is constructed so as to pass a water stream from an upstream water body towards a downstream water body. Said weir comprises a float for providing said weir with buoyancy. At a downstream position, with one end thereof said weir is hingedly connected to an anchor point. Said weir's floating body is positioned in a liquid filled vat, such that a variable liquid level in said vat makes the weir hinge around said connection and such that said weir may take several angular positions.

Said known weir aims at passing a constant water flow. By varying the liquid level in said vat, the weir's angular position can be set such that a constant water flow is passed through said weir. At a relatively higher water level of said upstream water body the weir will require a higher angular position than at a relatively lower water level of said upstream water body. The weir's floating body is positioned in a liquid that is not in communication with said upstream water body. According to US 5139364, it is impossible to obtain a constant water flow when the angular position is dependent on a floating body being positioned in the upstream water body.

This known embodiment has the disadvantage that an extensive control system is required for setting the weir's angular position. Also, a concrete casing is required, positioned on the water body's bed in which the weir and the water vat are contained.

The present invention aims at providing an improved flow weir of the kind as mentioned in the preamble.

The invention especially aims at providing a flow weir of the kind mentioned in the preamble and easily and automatically taking a position for passing a constant water flow, independent of the angular position and the water level of the upstream water body.

The invention also aims at providing an improved flow weir that can be connected to an existing weir wall without the need to adapt the bed of the water body.

The invention further aims at providing a flow weir that can be constructed at low costs.

So as to obtain at least one of the above mentioned advantages, according to a first embodiment the present invention provides a flow weir comprising the features as mentioned in claim 1. This flow weir provides the advantage that a constant water flow can be obtained easily based on the water level of the upstream water body.

The flow weir according to the present invention also provides the advantage that it can be connected to an existing weir wall, without the need to provide additional provisions on the water bed of the upstream of downstream water body or the weir wall.

A simple mechanical stop ensures that the weir plate can only be moved between a relatively lower position and a relatively upper position, with the consequence that a constant water flow is obtained at common upstream water levels, but that a higher water flow is obtained at a too high upstream water level.

The invention also has the advantage that the water flow can be easily controlled by providing the floating bodies with more or less ballast such that the overflow edge, being the retaining edge or water-retaining edge, is positioned deeper (i.e. lower) or shallower (i.e. less deep) in the water.

It has also shown that the invention can be made of synthetic material, for example plastic, without any detrimental effect on the weir's strength and with the advantage of retaining an excellent response to varying upstream water levels. Such synergistic effect is completely unexpected.

It is especially preferred that a floating body is provided at the side of each cheek plate facing away from the overflow edge. This way, a construction is obtained that both provides a high buoyancy and can be easily constructed. A symmetrical construction also easily provides a high strength.

It is especially preferred that at least one of said cheek plates comprises a stop, facing away from said cheek plate, such that said stop abuts against the weir wall upon rotation of said cheek plate about said hinge, for limiting the rotational movement of said cheek plate. The cheek plate will be positioned at the upstream side of said weir wall since the floating bodies and the overflow edge are positioned at that side, and will be positioned at least partially against the sides of the weir wall for providing a seal between the cheek plates and the weir wall. One, or both, of said cheek plates may comprise a stop at the weir wall's side, abutting against the weir wall or against a touch plate or the like provided on the weir wall upon rotation of the flow weir around the hinge. Then, the angle of rotation the flow weir is able to make, is limited. The stop may ensure that the retaining edge's maximum upward rotation movement is limited, with the proviso that the stop is connected to the cheek plate at the upstream side and abuts against the weir wall. The stop also may limit a retaining edge's maximum downward rotation movement, in which case the stop should be connected to a downstream side of the cheek plate and abuts against the weir wall.

So as to limit a maximum upward movement of the overflow edge it is preferred that at least one of the cheek plates at a side upstream from the weir wall, is provided with a stop protruding from said cheek plate. Then, the overflow edge may take a maximum position, with the consequence that a higher water flow is allowed when the upstream water body has an unexpectedly high level. This serves as a protection.

An embodiment wherein at least one of said cheek plates comprises a stop, protruding from said cheek plate, at a downstream side of said weir wall, such that the stop abuts against the weir wall upon rotation of the cheek plate around the hinge for limiting the rotational movement of the cheek plate, is preferred. The overflow edge then will be limited in its downward movement and as a consequence the overflow edge will not be moved to a position below said sealing plate.

It has proved to be useful that a weir plate is provided between the cheek plates and sealingly connected to said cheek plates, extending from the hinge towards the overflow edge. This yields a firm construction that is resistant against large forces.

It is preferred that gusset plates are provided below the sealing plates. These ensure a support of the sealing plate, such that it will not sag, for example due to the water falling on it from the over flow edge. The gusset plates are preferably connected to the weir wall.

According to a further aspect, the invention provides a flow weir, comprising: - two spaced apart and substantially parallel cheek plates, - a baffle for retaining water positioned in between said cheek plates and interconnecting same, - floating bodies that are connected to said cheek plates and positioned at a side thereof facing away from said baffle, and - a hinge connected to said cheek plates for connecting the weir to a weir wall of said flow weir. Such flow weir can easily be mounted to an existing weir wall with the consequence that an overflow weir can be turned into a flow weir according to the present invention easily and simply.

The invention also relates to a flow weir according to the invention wherein a weir pate is provided that extends from the hinge towards the overflow edge, said weir plate is positioned in between the cheek plates and is sealingly connected to said cheek plates. This provides a very firm construction that can withstand large forces.

Further advantages will be clear from the drawing and the description thereof, presenting a preferred embodiment of the present invention.

The invention will be explained by means of the following drawing. The drawing shows in:
Fig. 1 a schematic perspective view of a flow weir according to the present invention,
Fig. 2A and 2B a side and a front sectional view, respectively of the flow weir according to Fig. 1,
Fig. 3A and 3B a side view and a front view, respectively of a variant of the flow weir according to the invention in a first position, and
Fig. 4A and 4B a side view and a front view, respectively of the flow weir according to Fig. 3A and 3B in a second position.

In the figures, the same parts are indicated by means of the same reference numerals. However, for ease of understanding the drawing, not all parts that are required in a practical embodiment of the invention, have been shown.

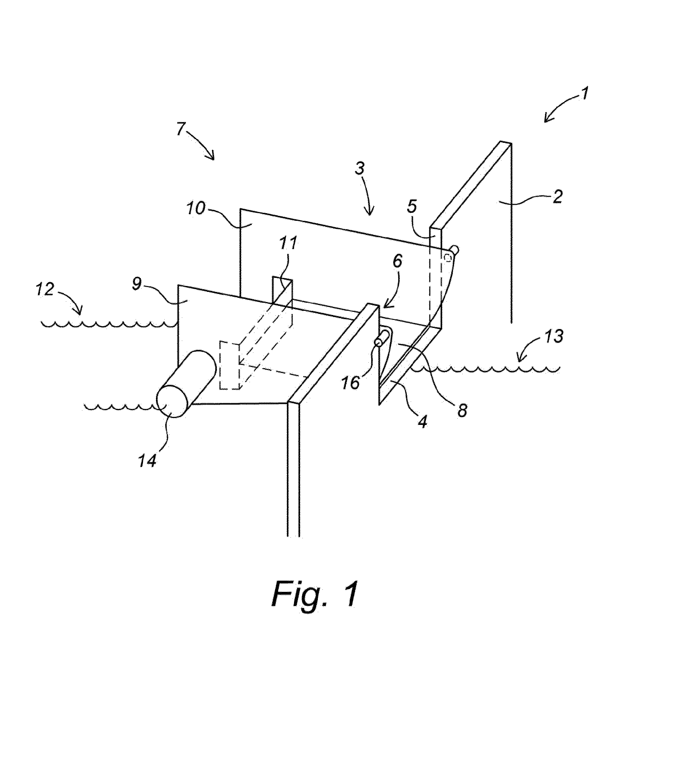

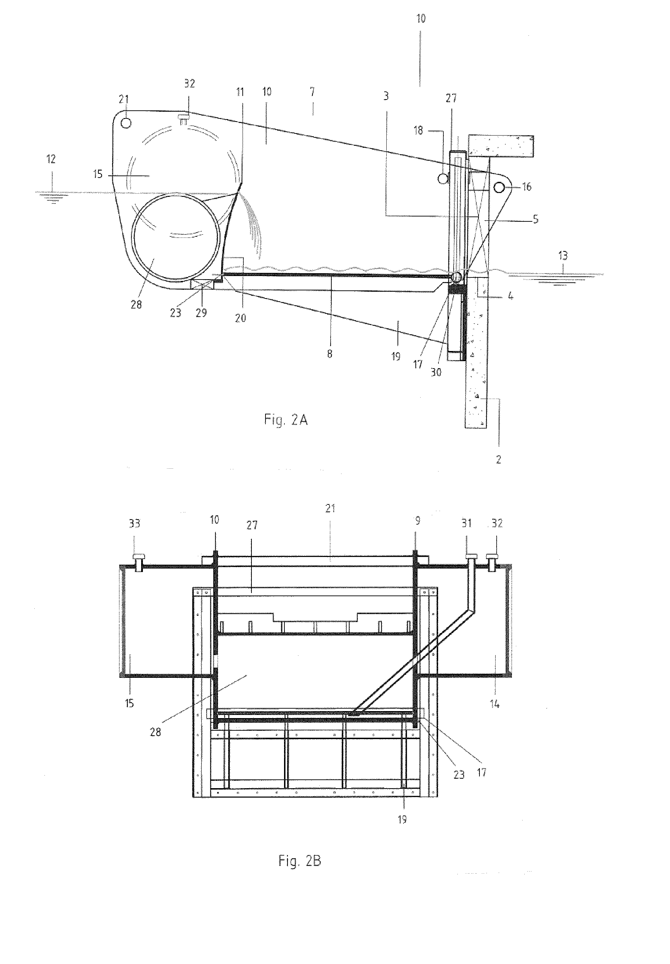

Fig. 1 shows a perspective view of a flow weir 1 according to the present invention. The flow weir 1 comprises a weir wall 2 with a flow passage 3 that is defined by an overflow edge 4 and side edges 5, 6. The flow weir 1 further comprises a flow weir 7 that substantially consists of a sealing plate 8 that is connected fixedly to the weir wall 2. The sealing plate 8 has a width that is slightly smaller than the width of the passage 3. At both sides of said sealing plate 8 two cheek plates 9, 10 have been provided. Said cheek plates 9, 10 are interconnected by means of an overflow edge 11. The cheek plates 9, 10 and the overflow edge 11 are able to rotate about a hinge 17 (as shown in Fig. 2, 3 and 4), said hinge being connected to the weir wall 2. Water that is obtained from an upstream water body and residing at an upstream water level 12, flows over the retaining edge 11 and onto the sealing plate 8 and subsequently to the downstream water body, residing at a downstream water level 13. The sealing plate 8 is sealed against the weir wall 2, the cheek plates 9, 10 and the overflow edge 11 by means of seals (not visible in Fig. 1). The flow weir 7 is made of a material that may have a higher specific weight than water, with the consequence that cheek plates 9, 10 and the overflow edge 11 will tend to immerse in the upstream water body. To that end, floating bodies have been provided. In fig. 1, a single floating body 14 has been shown, connected to cheek plate 9. In a similar way, a floating body 15 (schematically shown in fig. 2A, 2B, 3A, 3B, 4A and 4B) has been connected to cheek plate 10. As a consequence, an even power distribution on the flow weir 7 is obtained. Floating bodies 14, 15 have preferably been provided with a water inlet and exit so as to be able to enter ballast into the floating body and to remove it therefrom, respectively. In this way, the carrying capacity may be adapted, such that the overflow edge's 11 position with respect to the upstream water body's water level 12 may be adapted and, as a consequence, the flow that is passed by said flow weir.

The fixed part of the flow weir, also with reference to all remaining figures, consists of a frame 27 and a sealing plate 8. Frame 27 comprises two side posts, a bottom sill, a middle sill and a top sill. Said complete frame is constructed on a back plate (for example made of a synthetic material) and is connected with side posts of said frame and connected around a passage 3 of an existing weir wall or a weir wall construction 2. Said side posts and bottom sill of said frame are provided with sealing rubber 30 that provides for a sealing between the frame and the outside of the floating part (that is, cheek plates 9, 10 and pivot tube 17). Optionally, the sealing rubber 30 may be incorporated in a container or holder that is connected to said frame parts. Said containers or holders may be made of synthetic material.

Said holders as provided in the side posts also comprise bearing for the pivot tube 17.

At the frame's bottom side the sealing plate 8 is connected. Same is provided with a sealing rubber 23 surrounding said complete sealing plate (at four sides thereof), providing a sealing between said sealing plate 8 and the cheek plates 9, 10 and the pivot tube 17 that are directed towards the sealing plate. At its bottom side, the sealing plate 8 is provided with struts 19, preventing bending of said flow plate (i.e., said sealing plate) by means of water pressure.

The flow weir is, at its upstream side, connected with said floating bodies, opposing the flow direction of the water. Construction is preferably obtained by a weir wall construction 2 made of wood, concrete or steel comprising a recess 4, 5 and 6, the floating part of the weir, which protrudes behind said frame, being able to freely move through said recess, further comprising recesses for limitation stop 16.

The complete construction can be connected with a frame to the weir wall by means of bolts.

The sealing along the sealing plate 8 can be obtained with usually applied sealings 23 (as shown in Fig. 2A, 2B, 3A, 3B, 4A and 4B).

Fig. 1 shows a stop 16 connected to cheek plate 9 and abutting against weir wall 2 when flow weir 7 pivots about hinge 17 (see Fig. 2A), as flow weir 7 moves along with a descending water level 12.

In a similar way the cheek plate 9 may comprise a stop 18 (not shown in Fig. 1, shown in Fig. 2A, 2B, 3A, 3B, 4A and 4B) at the other side of the weir wall 2, abutting against the other side of the weir wall 2 when the flow weir 7 moves along with the ascending water level 12. The cheek plate 10 may comprise similar stoppers 16, 18.

Fig. 2A shows a schematic side view of flow weir 1 according to Fig. 1. Water flows over overflow edge 11 from upstream water level 12 via sealing plate 8 and passage 3 in weir wall 2 towards downstream water level 13.

Sealing plate 8 is supported by struts or gusset plates 19 being connected to weir wall. As a result, sealing plate 8 is firmly connected which prevents any deformation and torsion of sealing plate 8.

Cheek plates 9, 10 and overflow edge 11, substantially consisting of a curved plate 20 lying against sealing plate's 8 end that is directed away from weir wall's 2 end, are interconnected and may rotate about hinge 17 in a common sense. Actually, cheek plates 9, 10 are interconnected through connection plate 20. The shape of connection plate 20 is similar to the radius from pivot shaft 17. As a result, curved plate 20 or connection plate 20will abut against sealing plate 8 at every position of flow weir 1. The said hinge is on the one hand (directly or indirectly) fixedly connected to weir wall 2 and on the other hand to cheek plates 9, 10. Optionally, cheek plates 9, 10 may be interconnected by means of a connection rod 21. Stop 16 may also be constructed by means of a connection rod such that both ends thereof are positioned within recesses in cheek plates 9, 10, wherein both ends function as stoppers 16. In a similar fashion, stoppers 18 may be constructed as a connection rod.

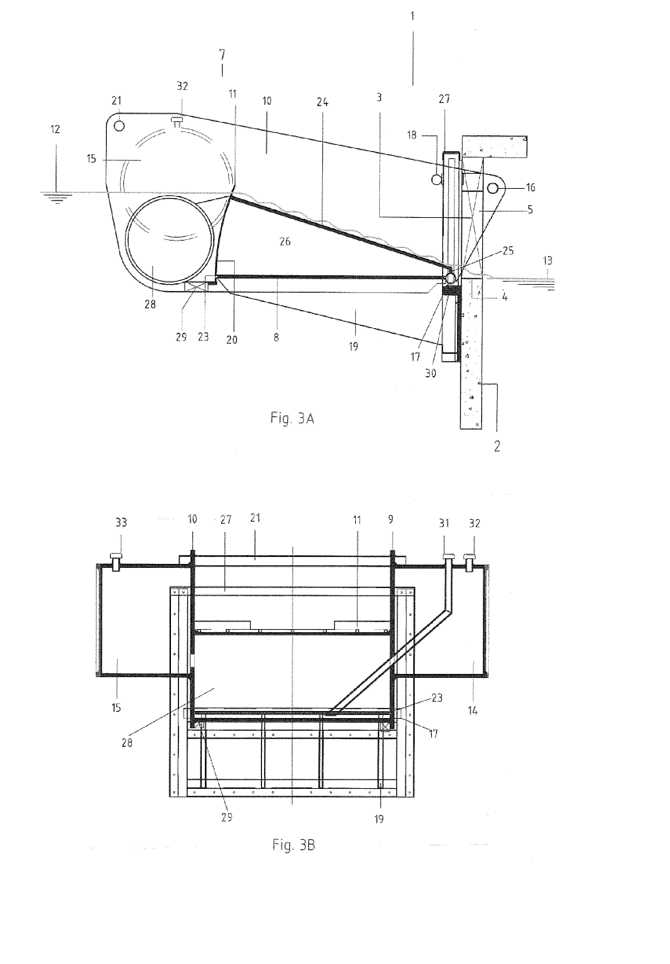

Floating bodies 14, 15 may be connected to cheek plates 9, 10 respectively. As is usual in the art, the floating bodies may be filled with water as ballast. Such aims at adapting the buoyancy of said flow weir 7 to a desired flow rate. A higher ballast ensures that the flow weir 7 will be positioned deeper in the upstream water body, and as a consequence the overflow edge 11 will be deeper in the water level 11 and a higher flow rate will be passed through. Both floating bodies 14, 15 can be interconnected hydraulically, in the sense of communicating vessels, by means of a conduit 22. Fig. 3B shows a partial front view of the embodiment according to Fig. 3A. This embodiment differs from the embodiment according to Fig. 2B, since the floating part of flow weir is positioned higher than the sealing plate 8, due to the fact that upstream water level is higher than as shown in Fig. 2B. Floating part of the embodiment in accordance with Fig. 2A, 2B, 3A, 3B, and 4A, 4B consists of two cheek plates 9, 10, a stabilizing floating body 28, two ballast floating bodies 14, 15, a weir plate 24, a curved plate 20, a pivot shaft 17, three spacers 16, 18, 21 and two compensators 29. Furthermore, as shown in Fig. 2B, 3B and 4B three passages 31, 32, 33 are provided in floating bodies 9, 10. Passages 32, 33 serve as vents, whereas passage 31 serves as passage for filling and/or removing ballast. When filling ballast, for example water, through passage 31, passages 32, 33 will be opened for removing air from floating bodies 28, 14, 15. Passages 31, 32, 33 can be closed after filling ballast has been ended. When removing ballast from floating bodies, at least one of the passages 32, 33 may be connected to an air compressor of the like. The air filled into the floating bodies will displace ballast through said duct to passage 31. Optionally, a single compressor can be connected to one of said passages 32, 33. Also, a pump may be connected to said passage 31 whereas passages 32, 33 serve as vents.

Between said cheek plates 9, 10, the stabilizing floating body 28, curved plate 20, pivot tube 17, three spacers and an optional weir plate 24 are provided. At the outsides of cheek plates 9, 10 two controllable ballast floating bodies 14, 15 with passages 31, 32, 33 have been provided. Ballast floating bodies 14, 15 are interconnected through stabilizing floating body 28 and commonly provide a compartment.

In fig. 3A a further embodiment of flow weir 7 is shown. In this embodiment, the flow weir comprises a weir plate 24 that is positioned between the overflow edge 11 and opening 3. Weir plate 24 is sealingly connected to cheek plates 9, 10 all around, and also to curved plate 20 and hinge 17. Sealing plate 8 is sealingly beared against curved plate 20 all around, and also to cheek plates 9, 10 and hinge 17. As a result, it is prohibited that water may reach the space 26 between weir plate 24 en de sealing plate 8 from the upstream water body. A passage 25 has been provided near hinge 17 for accommodating pressure differences between space 26 and the environment.

Stop 18 abuts against a frame 27, connected to weir wall. According to a further embodiment, stop 18 may abut against weir wall 2.

Fig. 3A shows an overflow edge 11 protruding from a floating body 27 positioned between cheek plates 9, 10. Floating body 27 may be left out, depending on the required buoyancy the floating bodies 14, 15 can provide. Also, overflow edge 11 as shown in Fig. 3A, may be left out. In that case, the end of weir plate 24 may serve as overflow edge. The embodiment as shown in Fig. 3A and 3B may be adapted, for example by extending weir plate 24 from hinge 17 towards curved plate 20, instead of towards a further position as shown in the present embodiment.

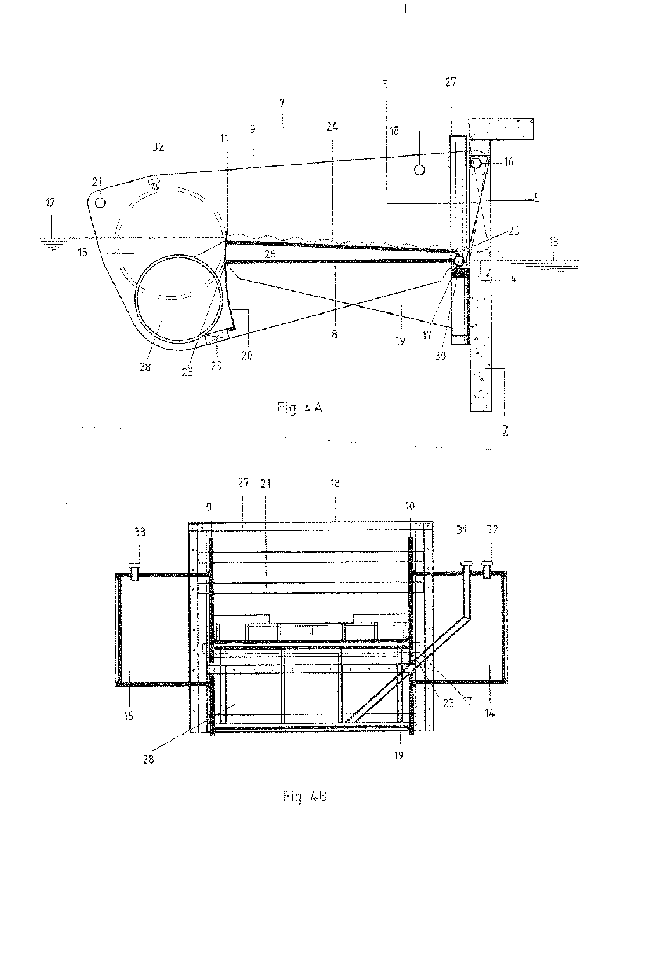

Finally, Fig. 4A shows a side view of an embodiment according to Fig. 3A wherein flow weir takes a position een positie due to a lower upstream water level than was the case in Fig. 3A. Weir plate 24 is supported on sealing plate 8. Also, stop 16 is supported against frame 27 that is connected to the weir wall. According to a further embodiment, stop 16 could be supported against weir wall 2. Fig. 4B analogously shows the embodiment according to Fig. 3B.

With reference to the drawing, the functioning of a preferred embodiment will hereinafter be described:
When floating bodies (stabilising floating body 28 and control ballast floating bodies 14, 15) are empty, the weir will be moved upwards due to the said bodies' buoyancy, when a (sufficiently) high upstream water level is reached.

The weir's floating part moves along an ascending radius about a pivot point. This movement will be limited by a most forward spacer 18 which protrudes at both sides to such extend through said cheek plates that it also functions as a restrictor.

In a case where at an upstream 12 position the maximum weir level is not obtained, water will not flow over the overflow edge 11 and a part of the flow weir from the weir plate between the cheek plates and downstream, will run dry or, as may be, adapt the downstream water level 13.

Then, ballast is filled into control ballast floating bodies 14, 15, such that a desired overflow height (and a corresponding flow rate) is obtained. Due to the fact that an equilibrium is reached, the weir will follow the upstream water level 12 and provide a constant flow rate within the control area limited by spacers 16, 18 that also serve as restrictors of said control area.

Stabilizing floating body 28 ensures a stable floating of the weir and ensures that it substantially will not exhibit any bobbing due to billowing.

The weir's response time depends on the force required to overcome the friction of sealing rubbers 23, 30. Said friction is minimized by providing said rubbers with a special coating and/or applying a tread with a low coefficient of friction.

Providing the floating bodies with ballast may be obtained manually by opening passage or fill opening 32 and vent vap 33 on ballast floating body and filling water through fill opening 32 in ballast floating body 15 (by means of a watering can, a bucker or a submersible pump). When draining control ballast (water) from the floating bodies, fill opening 32 and drain opening 31 are opened and air pressure is applied on the water in the floating bodies through the fill opening 32, a compressor may be used as well as a mouth piece connected to said fill opening and said compressor, with the consequence that the water will be drained from the ballast floating body through drain conduit and drain opening 31. After a sufficient amount of control ballast has been removed, floating bodies are deaerated and the openings are closed. Since the control ballast moves along a radius (floating body radius) with reference to the pivot point, the ballast's torque will be different in every different position of the ballast floating body, and as a consequence a (minimum) deviation from the flow rate will be obtained. In case said deviation is not tolerable two compensators 29 may be used, probably comprising simple weights.

The invention provides the advantage that a simple flow weir is obtained that can be connected to an existing weir wall in a simple way. A fixed part, comprising frame parts 27, sealing plate 8 and struts 19 can be connected to the weir wall around the passage in the weir wall. Subsequently, the moving part can be positioned, said moving part comprising cheek plates 9, 10, overflow edge 11 and floating bodies 14, 15, 28. The hinge may be connected to the fixed frame. Optionally, the complete construction, that is fixed part and moving part, may be constructed as a prefab element and be connected as such to the weir wall. Because the position of the overflow edge is determined by the floating bodies alone, the overflow edge will always be positioned at a fixed position with respect to the upstream water level. A minimum and maximum position of said overflow edge may be obtained by providing stoppers on said cheek plates, which abut against the weir wall's side edges or against frame parts and as a result will limit the maximum deflection of the weir's moving part. When a single weir plate 24 is provided, the sealing plate 8 provides the advantage that there is no water below the weir plate 24. As a matter of fact, a water level below the weir plate 24 would provide a lifting force on the weir plate and as a consequence the overflow edge's position with respect to the upstream water level would not be constant upon varying upstream water levels.

Preferably, the ballast floating bodies 14, 15 are provided at both sides of the cheek plates, such that the water flow is not hindered. It is also preferred, especially when applying barrel shaped floating bodies, that the centre point of said floating bodies is positioned near the upstream water level, which imposes a minimum influence on the floating body's torque that is exerted when the weir rotates along pivot shaft.

The stabilizing floating body 28 ensures that billowing has little influence on the position of the flow weir in the water.

According to a preferred embodiment, plate 24 may comprise protruding baffles. Said baffles may be positioned perpendicularly from said plate 24. Said baffles may preferably be positioned parallel to said pivot shaft and/or the overflow edge. Plate 24 may function as a fishway. For example, the baffles may comprise synthetic material, metal, or any other material that can suitably be used for the said purpose. Especially when in use as a fishway, the overflow edge may have a same height with respect to the plate 24, as the baffles. Optionally, the baffles' height may increase or even decrease from the overflow edge towards the pivot shaft.

The invention is not limited by the description as given above or as shown in the drawing. The invention is limited by the claims only.

The invention also relates to every combination of features that have been described independently from each other.

## Claims

1. A flow weir with a weir wall that is positioned perpendicular to a water flow direction, said weir wall comprising a flow passage with an overflow edge and side edges extending upwards from said overflow edge for passing water from an upstream water body towards a downstream water body, said flow weir further comprising in said flow passage a weir device comprising a floating body and an overflow edge that is coupled to said floating body, **characterized in that** said flow weir further comprises:
- a sealing plate connected to said weir wall and extending parallel to the overflow edge and in an upstream direction,
- two cheek plates, sealingly positioned against said side edges and interconnected, said cheek plates being beared pivotably about a hinge near the overflow edge and connected to said overflow edge, both cheek plates extending in an upstream direction,
- such that the cheek plates are positioned at both sides of and sealingly against said sealing plate, and
- wherein on a position away from the overflow edge between said cheek plates and connected to said cheek plates, a connecting plate is provided defining the overflow edge, such that the connection plate is positioned sealingly against said sealing plate.

2. A flow weir according to claim 1, wherein a floating body is provided at the side of each cheek plate facing away from the overflow edge.

3. A flow weir according to claims 1 or 2, wherein at least one of said cheek plates comprises a stop, facing away from said cheek plate, such that said stop abuts against the weir wall upon rotation of said cheek plate about said hinge, for limiting the rotational movement of said cheek plate.

4. A flow weir according to claims 1, 2 or 3, wherein at least one of said cheek plates is provided with a stop protruding from said cheek plate at a position upstream from the weir wall.

5. A flow weir according to any of the preceding claims, wherein at least one of the cheek plates comprises a stop, facing away from said cheek plate, such that said stop abuts against the weir wall upon rotation of said cheek plate about said hinge, for limiting the rotational movement of said cheek plate.

6. A flow weir according to any of the preceding claims, wherein the flow weir comprises a weir plate between the cheek plates and sealingly connected to said cheek plates, said weir plate extending from said hinge towards said overflow edge.

7. A flow weir according to any of the preceding claims, comprising gusset plates below said sealing plate.

8. A weir construction for use in a flow weir according to any of claims 1-5, comprising: - two spaced apart and substantially parallel cheek plates, - a baffle for retaining water positioned in between said cheek plates and interconnecting same, - floating bodies that are connected to said cheek plates and positioned at a side thereof facing away from said baffle, and - a hinge connected to said cheek plates for connecting the weir to a weir wall of said flow weir.

9. A weir construction according to claim 8 for use in a flow weir according to claim 6, further comprising a weir plate extending from said hinge towards said overflow edge, said weir plate being positioned between said cheek plates and sealingly connected to said cheek plates.
